# EUROPEAN PATENT SPECIFICATION

(11) **EP 4 247 906 B1**
(45) Date of publication and mention of the grant of the patent: **01.01.2025**
(21) Application number: 21807113.2
(22) Date of filing: 12.11.2021
(51) Int. Cl.: C09D 11/102, C09D 1/00, C09D 11/30, C09D 183/04

(54) **REACTIVE SOL-GEL INK FOR DIGITAL PRINTING**
REAKTIVE SOL-GEL-TINTE FÜR DIGITALEN DRUCK
ENCRE SOL-GEL RÉACTIVE POUR L'IMPRESSION NUMÉRIQUE

(30) Priority: 18.11.2020 EP 20208458
(43) Date of publication of application: 27.09.2023
(73) Proprietor: HELIOS Tovarna barv, lakov in umetnih smol Kolicevo d.o.o., 1230 Domzale (SI)
(72) Inventor: GAZZOLA, Stefano, 20871 Vimercate (Monza Brianza) (IT); COSTACURTA, Stefano, 31100 Treviso (IT); BELLOTTO, Luca, 31100 Treviso (IT); RAMETSTEINER, Karl, 4040 Linz (AT); BREITWIESER, Christian, 1020 Wien (AT)
(74) Representative: Schwarz & Partner Patentanwälte GmbH
(86) International application number: PCT/EP2021/081521
(87) International publication number: WO 2022/106312

(56) References cited:
- US-A1- 2003 152 708
- US-B1- 6 828 381
- K GREIWE: "Korrosionsbeständige Schutzbeschichtung für Messingoberflächen", FARBE UND LACK, vol. 97, no. 11, 1 November 1991 (1991-11-01), pages 968 - 971, XP009527198, ISSN: 0014-7699

## Description

### TECHNICAL FIELD

The present invention relates to the field of inks, in particular to inks used for printing metal coils.

### BACKGROUND ART

Coil coating, also known as continuous metal coil coating, is an endless process for continuously coating metal coils, in particular steel or aluminium coils, on one or both sides. During this process a metallic carrier is coated with lacquers, plastic powders and/or foils. The resulting material is typically a composite of a metallic carrier material and an organic coating.

Typical applications for coil coatings include exemplarily roof and facade constructions for buildings, electrical and household appliances, such as washing machines, microwave ovens and refrigerators, office furniture, housings of switch cabinets, EDP devices and lights, slats for blinds, sheet metal doors and gates, garages, garden sheds, (suspended) coffered ceilings, trailer superstructures, caravans, car bodies, cans for food and drinks and aluminium tubes for pasty ingredients.

Steel sheet and aluminium are used almost exclusively for coil coating processes. After production, the up to 3 m wide metal strips are delivered to the coating plant in a coiled state and endlessly welded together. First of all, the coils are degreased to remove fats and oils that were applied after metal production to protect the surface. This is done, for example, by alkaline cleaning. Then the coils are chemically passivated by a pre-treatment, for steel usually using well-known phosphating processes. In some cases, this process can be omitted if the steel has been galvanized.

At the beginning of the coating process a primer is usually applied on the metallic carrier to improve adhesion and corrosion protection. The primer can be based on organic resins which may comprise corrosion protection pigments. Instead of the aforementioned primer, a pigmented primer can also be applied, which, in the case of subsequent multicolour printing, is already dyed white.

After the primer, either a coloured topcoat with a selectable gloss level, structure and colour or a colour print, for structured, design-compliant decoration is applied on the carrier. This colour printing can be carried out using one or more colours (e.g. four-colour printing) .

Usually the colour print is kept very thin (e.g. 5-15g/m²) and is neither weather-resistant nor suitable for direct use. Hence, this colour coating must be protected by a colourless top coat. This can also be additionally applied to the ink layer to increase resistance to external influences.

All these layers (primer, colour print layer, top coat) usually applied either wet-chemically by rolling/rolling very evenly, without significant loss of paint, or by powder coating (e.g. solvent-free powder coating).

The individual coating steps (layers) are usually interrupted by drying and thermal curing steps, but usually take place immediately after each other in a single conveyor system.

The process is very efficient. The surface quality is more uniform and the layer thicknesses are easier to control than with non-continuous coating methods. In addition, there is hardly any loss of paint through overspray, as is the case with classic wet paint spraying.

Colour printing is carried out in accordance with today's requirements for production flexibility, design freedom and economic efficiency from "industrial digital printing", which is increasingly replacing conventional processes such as offset, flexographic printing and screen printing. Basically there are two printing systems industrially used: inkjet printing using a liquid colour medium ("ink") (digitally controlled dosing of smallest ink drops by a large number of synchronously acting piezo pumps) and laser printing using solid toners (powder coating).

A continuous metal coil coating process for the multi-layer coating of an endless metal strip in a continuous flow is known from the state of the art (DE 102005061319 A1). In such processes, a conversion layer is usually produced on one flat side of the metal strip, a curable polymeric primer is then applied to this flat side by means of a roller application to form a primer layer, and a curable polymeric lacquer is applied to this primer layer by means of a roller application to form a lacquer layer and cured. Such processes also serve to functionalise the metal coil, for example by giving a metal coil an antistatic, electromagnetic, anti-bacterial, electrical, etc. functional property by means of the topcoat.

Coil coating with the integration of digital printing (DP) is known, for instance, from WO 01/92025. Therein it is described that the integrative layer structure (at least two layers on metal: digital printing layer and top layer, or primer, digital printing layer and top layer) shall be designed in such a way that subsequent processing steps like punching or folding can be easily survived. In addition thereto, UV and weather resistance are required for outdoor applications. Adhesion of the layers to each other and constant elasticity, with simultaneous surface hardness, are also considered as advantageous properties. In order to obtain these properties individual layers are usually based on the same, or similar, or at least "related" polymer bases (e.g. polyester, polyurethane). In order to achieve the necessary strengths/properties, the polymers used are additionally cross-linked thermally, partly by means of reactive additives, and in individual cases also UV-cured. Each layer is cross-linked on its own, whereby temperatures of up to 250° are required for thermal treatment. The high degree of cross-linking achieved in this way is advantageous for the property profile, but reduces the chemical bonding capacity to the layer above, so that physical bonding mechanisms are primarily used. In order to strengthen these, strongly swelling, high-boiling solvents (e.g. alkyl lactates) are suggested for the next layer (e.g. DP layer). However, high baking temperatures (> 180°), is at the expense of the long-term resistance and the elasticity of the overall structure. For this reason, such systems are highly disadvantageous. Further prior art is described in US 6 828 381 B1 and US 2003/152708 A1.

An ink useful in coil coating or printing processes, shall have the following properties:
1. very good bonding properties (adhesion) to each other and to a (metallic) substrate, optionally being coated with a primer;
2. high flexibility as coil sheets are subjected to multiple mechanical stresses during the coating process due to the "reel to reel" processing and the subsequent processing steps (folding, punching, deep drawing...) to the finished product;
3. weather resistance for outdoor applications (facade elements, roofs, advertising structures...) like UV exposure, abrasion by cleaning processes, rain and wind-borne media (dust, sand), resistance to salt, especially near the coast, and chalking of the surface due to the effects of heat, water and UV light.

Hence, it is an object of the present invention to provide a composition and an ink on the basis of such a composition, which has a superior pot live compared to known coating compositions and allows printing on or coating of preferably deformable metallic substrates.

A further object of the present invention is the provision of a coordinated, at least three-layer coil coating system comprising
- a primer based on a preferably saturated polyester resin, optionally combined with reactive melamine resins, epoxy resins and/or isocyanates, being supplemented with colourless or white, preferably anti-corrosion, pigments, to form a basis for subsequent colour printing.
- colour inks based on pigmented sol-gel compositions, each of which has a viscosity, surface tension and storage life suitable for inkjet printing and whose composition ensures covalent bonding with the primer and a topcoat, and
- a colourless topcoat, glossy or matt or structured, based on a preferably saturated polyester resin, optionally combined with reactive melamine resins, epoxy resins and/or isocyanates, for crosslinking and covalent bonding with both the primer and the sol-gel layer.

Another object of the present invention is thus to find a coating system, while maintaining or improving the required final properties, which on the one hand leads to a practicable solution of a coil coating under moderate cross-linking conditions (e.g. temperature) and on the other hand by consistent use of chemical binding energies, including the advantageous digital printing.

### SUMMARY OF THE INVENTION

The present invention is defined in claims 1-16 as attached. Thus, the present invention relates to a reactive sol-gel ink for printing a metallic substrate, preferably for a coil coating process, comprising 10 to 30 wt% of a sol-gel resin composition and at least one pigment, preferably at least one yellow pigment, at least one purple pigment, at least one cyan pigment or at least one black pigment, wherein the sol-gel resin composition comprises
a) 35 to 65 wt% of a hydrolysate obtainable by reacting a mixture comprising at least one epoxy functionalized alkoxy-silane, at least one further trialkoxysilane and at least one aluminum alkoxide with water comprising at least one acidic catalyst, wherein water is added to said mixture in a molar ratio to each hydrolysable group of the at least one epoxy functionalized alkoxy-silane, the at least one further trialkoxysilane and the at least one aluminum alkoxide ranging from 0.95:1 to 1:0.95,
b) 35 to 55 wt% of at least one alcohol, and
c) 0.1 to 10 wt% water.

Sol-gel compositions and inks/coatings comprising said compositions known in the art are typically based on nanoscale metal hydroxides like Si(OH)₄, Ti(OH)₄, Zr(OH)₄ and Al(OH)₃ and may form highly cross-linked layers during drying and thermal condensation, either on their own or in mixtures with each other. Such layers are usually very brittle and therefore only well suited for coating hard ceramic bodies (e.g. tiles, slabs, glass, etc.) but not suitable for printing or coating flexible substrates like metal coils.

Sol-gel layers can be produced, in case of silicon, by acid precipitation from the corresponding orthosilicates or from corresponding alkoxy derivatives containing three alkoxy groups. Thus, sol-gels based on silicon being monosubstituted are crosslinkable in three dimensions. This increases the flexibility of the formed layers, but with undesired release properties as a typical silicone property within the layers.

It surprisingly turned out that the reactive sol-gel ink of the present invention can be used to coat and/or print substrates, preferably flexible or deformable substrates and in particular flexible or deformable metallic substrates.

It was found that the addition of water to a combination of at least one epoxy functionalized alkoxy-silane, at least one further trialkoxysilane and at least one aluminum alkoxide results via a hydrolytic reaction in a sol-gel resin which can be used to print or coat deformable substrates. In particular the combination of at least three different metal alkoxides turned out to be particularly advantageous.

The addition of stoichiometric amounts of water (in regard to the hydrolysable alkoxy groups) turned out to be particularly advantageous because it allows the controlled hydrosylation of the alkoxy groups which in turn influences positively the polymerization of the silanes and the aluminum alkoxides within the reaction mixture. A result thereof, is the surprisingly long pot life of the sol-gel composition and the reactive sol-gel ink comprising said sol-gel composition.

It was also surprisingly found that the "reactive ink" of the present invention based on a sol-gel, fulfils all required properties for coil coating or printing processes mentioned above. This is unexpected, because it refutes the thesis of "equality of layers", but on the other hand, so that the necessary reactivity is generated. In order to meet the technical requirements that are still necessary, it has been shown that a sol-gel resin (as a binder for the ink formulation) must have the above defined composition.

Another aspect of the present invention relates to a method for producing a sol-gel resin, usable for producing a reactive sol-gel ink according to the present invention, comprising the step of reacting a mixture comprising
a) at least one epoxy functionalized alkoxy-silane,
b) at least one further trialkoxysilane and
c) at least one aluminum alkoxide
with water comprising an acidic catalyst, wherein water is added to said mixture in a molar ratio to each hydrolysable group of the at least one epoxy functionalized alkoxy-silane, at least one further trialkoxysilane and at least one aluminum alkoxide ranging from 0.95:1 to 1:0.95.

The reactive sol-gel ink of the present invention can be applied on a substrate using varying methods whereby an inkjet method is particularly preferred. This ink can be applied directly on a metallic substrate or on a metallic substrate coated by a base coat layer. Consequently, the present invention relates to a method for coating a metallic substrate or printing on a metallic substrate, preferably a coil coating process or a coil printing process, comprising the steps of
a) applying a sol-gel ink according to the present invention on a metallic substrate or on a base coat layer covering at least partially a metallic substrate, and
b) applying a top coat composition comprising at least one saturated polyester resin.

The reactive groups present in the sol-gel ink according to the present invention turned out to be advantageous because they may react with the at least one polyester molecules present in the base as well as in the top coat. Due to these cross-linking reactions the layers will be bound to each other more tightly resulting in a stable coating. The reactive groups present in the reactive sol-gel ink of the present invention are able to react with metal surfaces (and their oxidation products on the surface, Me-OH), saturated polyester (preferably with -OH and -COOH groups), polyurethanes (-R-NH-COOR), melamine based crosslinkers (e.g. -NH-CH₂-OCH₃, -N(CH₂-OCH₃)₂, isocyanates (-RNCO), oxiranes (e.g. -R-CH-CH₂(O) or -R-CH(OH)-CH₂OH) and/or oxidic/silicatic pigments.

A further aspect of the present invention relates to a metallic substrate or a coated metallic substrate, preferably a deformable metallic substrate, obtainable by a method according to the present invention.

### DESCRIPTION OF EMBODIMENTS

The present invention relates to a reactive sol-gel ink comprising a sol-gel composition according to the present invention and at least one pigment, preferably at least one yellow pigment, purple pigment, cyan pigment or black pigment to cover the CMYK colour space.

The sol-gel composition of the present invention can be combined/mixed with at least one pigment forming a sol-gel ink. The sol-gel ink of the present invention has unique properties because it can be used to stably print or coat deformable or flexible substrates. This is particularly advantageous because it allows to produce a printed or coated substrate which can be deformed after the printing or coating process without negatively affect the printing or coating.

A "reactive sol-gel ink", as defined herein, refers to a sol-gel ink comprising reactive groups present, e.g., on surfaces to be coated with the ink or further coating layers.

A "metallic substrate", as defined herein, includes substrates consisting of a metal or metal alloy and substrates which are covered at least partially (preferably entirely) with a metal or metal alloy.

The hydrolysate present in the sol-gel composition of the present invention is obtainable by reacting a mixture comprising at least one epoxy functionalized alkoxy-silane, at least one further trialkoxysilane and at least one aluminum alkoxide with water comprising at least one acidic catalyst. Due to the addition of water the alkoxides hydrolyse by forming an alcohol according to the following equation (partial hydrolysation): M(OR)ₙ + H₂O → M(OR)ₙ₋₁ OH + ROH, whereby M can be silicon or aluminum atom and R is an organic substituent.

In the presence of an excess of water and/or an optional acidic catalyst the alkoxide may entirely hydrolyse forming, in case of a silicon alkoxide, silica. Hence, it turned out that it is advantageous to add water in a substantially stoichiometrically amount to the hydrolysable groups of the at least one epoxy functionalized alkoxy-silane, the at least one further trialkoxysilane and the at least one aluminum alkoxide (i.e. molar ratio ranging from 0.95:1 to 1:0.95). This guarantees that the alkoxides within the mixture hydrolyse in a velocity to allow the condensation of the alkoxides, thus, forming condensates or even polymers.

The use of a combination of metal alkoxides and silicon alkoxides turned out to be particular advantageous. Metal alkoxides, in particular aluminum alkoxides, show enhanced reactivity towards hydrolysis, or nucleophilic attack in general, compared to silicon alkoxides because of the lower electronegativity and resulting higher Lewis acidity of the metals compared to silicon. Therefore, aluminum is the first alkoxide within the mixture hydrolyse and to react with silicon. Al-O-Al bonds and Al-O-Si bonds will, hence, be formed before Si-O-Si bonds. As a consequence thereof, aluminum atoms will form the core of the condensate. Hence, the presence of aluminum alkoxides is particular beneficial in the sol-gel formation.

The presence of at least one epoxy functionalized alkoxy-silane within the reaction mixture for obtaining the hydrolysate of the present invention is particularly advantageous because the epoxy groups within these silanes are useful in the polymerisation process within the hydrolysate but also in reactions with reactive groups like -OH, -COOH, -NH₂, -NCO, NHCH₂OCH₃, -N(CH₂OCH₃)₂ which may be present in other coating layers if the sol-gel composition of the present invention is used for coating substrates. Hence, the use of epoxy groups gives more flexibility in relation to reaction partners. Furthermore, epoxy groups support the stability and the binding efficiency of coating layers because a coating layer comprising the sol-gel composition of the present invention can bind to reactive groups present in other coating layers or on the substrate to be coated.

This "reactive ink", according to the invention, permits the construction of an integrated layer system on a metal substrate by the special nature of its reactivity, which is based on at least two reaction centers:
- (R)₁₋₂-Si-(OH)₂₋₃: with special reactivity towards metal surfaces, as well as oxidic/silicatic pigments
- (OH)₃-Si-Spacer-CH-CH₂(O) or (OH)₃-Si-Spacer-CH(OH)-CH₂(OH), respectively, with special reactivity towards organic groups with active H, i.e. = NH, -NH₂, -OH, -COOH, -NH-COOR.

The sol-gel resin composition of the present invention comprises next to the hydrolysate at least one alcohol and additional water. Both components are helpful to elongate the pot life of the sol-gel resin as well to stabilize it.

The term "epoxy functionalized alkoxy-silane", as used herein, refers to alkoxy-silanes comprising epoxy groups (also known as epoxide and oxirane groups) at a terminal end of an alkoxy group of such silanes. Preferably, an alkoxy-silane molecule comprises one epoxy group.

Next to the at least one epoxy functionalized alkoxy-silane the mixture used to obtain the hydrolysate comprises a "further trialkoxysilane". The "further trialkoxysilane" does not contain any epoxy group or other functional groups.

According to a further preferred embodiment of the present invention the at least one epoxy functionalized alkoxy-silane is selected from the group consisting of glycidyloxyalkylalkoxysilanes, preferably 3-glycidyloxypropyl-trimethoxysilane, 3-glycidyloxypropyl-triethoxysilane, 3-glycidyloxypropyl-methyldimethoxysilane, 3-glycidyloxypropyl-methyldiethoxysilane, 3-glycidyloxyoctyl-trimethoxysilane or 3-glycidyloxyoctyl-triethoxysilane, 2-(3,4-epoxycyclohexyl)ethyltrimethoxysilane, 2-(3,4-epoxycyclohexyl)ethyltriethoxysilane, 2-(3,4-epoxycyclohexyl)propyltrimethoxysilane, 2-(3,4-epoxycyclohexyl)propyltriethoxysilane and 5,6-epoxyhexyl-trimethoxysilane, preferably selected from the group consisting of 3-glycidyloxypropyl-trimethoxysilane, 3-glycidyloxypropyl-triethoxysilane, 3-glycidyloxyoctyl-trimethoxysilane and 3-glycidyloxyoctyl-triethoxysilane.

These epoxy functionalized alkoxy-silanes are particularly advantageous.

According to a further preferred embodiment of the present invention the at least one further trialkoxysilane has the general formula (I)

R₁Si(OR₂)₃ (I),

wherein R₁ is a linear or branched alkyl group having from 1 to 6, preferably 3 to 5, more preferably 4 or 5, carbon atoms or an aryl-group and R₂ is a linear or branched alkyl group having from 1 to 4 carbon atoms.

The length of the alkyl groups influences the flexibility of the sol-gel polymers formed within the hydrolysate and consequently also the flexibility of a coating of an ink comprising said hydrolysate. Hence, it is advantageous that the alkyl groups have a certain length. However, it turned out that alkyl groups exceeding a certain length are disadvantageous because they show a significantly reduced binding capacity when used as a coating or ink. Consequently, it is preferred that the alkyl groups of the at least one further alkoxy silane has 6 or less carbon atoms.

The elasticity of a coating or ink comprising the sol-gel composition of the present invention can be increased even more, if R₁ is an aryl-group, preferably a phenyl-group. The reason for this effect may be the more balanced space which an aryl-group requires within the hydrolysate. Hence, according to another preferred embodiment of the present invention the aryl-group is a phenyl-group.

According to a preferred embodiment of the present invention the at least one further trialkoxysilane is triethoxyphenylsilane.

It turned surprisingly out that it is particularly advantageous to use a trialkoxyphenylsilane (PhSi) (e.g. triethoxyphenylsilane) in combination with at least one epoxy functionalized alkoxy-silane, preferably with a glycidyloxypropyl-trialkoxysilane (GSi), due to first precondensations in the hydrolysis process to particularly good results with formation of inks from it. A ratio of GSi:PhSi of 3.2:1 to 1:1, preferably 1.5:1, has proven to be particularly advantageous.

In another preferred embodiment of the present invention the at least one aluminum alkoxide is aluminum sec-butoxide.

Surprisingly, it was found that the simultaneous hydrolysis of at least one silicon alkoxide with at least one aluminum alkoxide, for example aluminum sec-butoxide, leads to a sol-gel with higher hardness, but undiminished elasticity and adhesion. Furthermore, the cross-linking conditions are also improved, as the temperature/time gradient decreases.

The molar ratio between the at least one epoxy functionalized alkoxy-silane and the at least one further trialkoxysilane in the mixture a) ranges preferably from 3:1 to 1:2, preferably 2:1 to 1:1, more preferably 1.8:1 to 1.4:1, in particular 5:3.

According to a preferred embodiment of the present invention the molar ratio of the at least one epoxy functionalized alkoxy-silane and the at least one further trialkoxysilane to the at least one aluminum alkoxide in the mixture a) ranges from 2.3:1 to 10:1, preferably 5:1 to 7:1, more preferably 6:1 to 7:1.

It is known in the art that the production of sol-gels by hydrolysis of alkoxysilanes etc. involves water, which is often used in amounts significantly above the stoichiometrically calculated amount. The addition of such amounts of water results - according the prior art - in improved hydrolysis conditions. It was found that water for hydrolysis should be added to the mixture of alkoxides in a substantially stoichiometric quantity as defined herein. In order to ensure complete hydrolysis nevertheless, the use of hydrolysis catalysts (e.g. acids) is necessary. Hydrolysis catalysts can be acetic acid, phosphoric acid, nitric acid, formic acid and/or hydrochloric acid.

It was surprisingly found that the particle size within the sol may be influenced by the type and quantity of acidic catalyst. The acid dissociation constant, pKa, is a measure for the strength of an acid and influences the above mentioned effect. The hydrolysis acid catalysts regularly used in sol-gel processes known in the art have a pKa value of 5 or less (typically used acetic acid has a pKa value of 4.75). Particularly good results are obtained with acidic catalysts having a pKa value of below -2 (i.e. minus 2).

Hence, in a particularly preferred embodiment of the present invention the acidic catalyst has a pKa value of less than 5, preferably less than 4.75, more preferably less than 3, more preferably less than 1, more preferably less than -2.

Templin et al. (Adv. Mater. 1997, 9, 814-817) investigated epoxisilanes-tri-alkoxyaluminum during hydrolysis to sol-gels. NMR spectra show that the addition of already 1 mol% trialkoxyaluminum to epoxysilanes during hydrolysis has a strong catalytic effect on the splitting of the oxirane rings to a diol, or by etherification with CH₃OH (resulting from the hydrolysis of the silanes) to a methoxy alcohol, or further condensation to oligo-(ethylene oxides). This is mainly caused by 2 effects:
- trialkoxyaluminum is preferably hydrolysed, i.e. with continuous addition of water to the silane/alkoxyaluminum mixture, the aluminum compound is attacked first (almost) exclusively. Thus, before silanols are formed, aluminum hydroxide gels are already present, which then exert this catalytic effect, mainly due to their basicity, before they are covalently bound into the sol-gel network by condensation reactions.
- in all examples of EP 0 610 831, without exception, work is carried out in the neutral range, i.e. without acid hydrolysis catalysis.

These reaction consequences can, according to the invention, be reduced/minimized if the hydrolysis reaction takes place preferably in the acidic range, whereby, surprisingly, p-toluenesulfonic acid, with its low pKa value, is particularly preferred.
a. The use of PTSA increases the reactivity of the "reactive ink" by maintaining particularly reactive centers (e.g. oxiranes)
b. In addition, PTSA later acts as a crosslinking catalyst in the course of the desired layer build-up when the layers are connected to each other (e.g. top coat with reactive ink layer and/or top coat).
c. Finally, in the course of the layer formation, PTSA is bound thermally stable to oxiranes from the adjacent layers and the sol-gel.
d. The presence of PTSA in the reactive ink allows sufficient crosslinking of this digital printing layer even at moderate drying temperatures in the order of 100°C, i.e. IR radiation and not oven temperatures of up to 250°C. This significantly reduces the thermal load on the entire coating system during the coating process.

Thus, according to a further preferred embodiment of the present invention the acidic catalyst is an organic acid, preferably an aryl sulfonic acid, more preferably p-toluenesulfonic acid.

Since anions of the acidic catalysts used remain in the sol-gel/ink, inorganic acids (e.g. HCl, HBr), in particular with pKa values in the minus range, are less suitable for coating or printing metallic substrates. These anions may be problematic with regard to the desired corrosion protection effect.

It was surprisingly found that the use of p-toluenesulfonic acid (PTSA) with a pKa value of -2.8 represents a preferred acidic catalyst for various reasons. First, P1TSA is a strong acid lacking any interfering anion. Second, PTSA acts as a condensation catalyst, both in the thermal condensation of the gel particles and in crosslinking of polyester resins with melamine oligomers (e.g. hexa - methoxymethyl - melamine), which are frequently used for coating substrates. Third, PTSA which is no longer catalytically active or required in the sol-gel composition may be covalently bonded to the boundary layers of the coating system by the epoxy groups of the alkoxy-silane (e.g. oxirane groups of glycidylsiloxane) and thus deactivated.

Rₐ-SO₃H (PTSA) + oxirane-R_{b} --> Rₐ-SO₃-CH(OH)-CH₂-R_{b}

The formation of new OH groups by the addition reaction of the epoxy groups (e.g. oxiranes) to the sulfonic acid group, as shown above, proves to be particularly advantageous, because it maintains the possibility of further integration into the macromolecular structure in the course of further crosslinking reactions.

According to a preferred embodiment of the present invention the amount of acidic catalyst amounts from 0.01 to 0.6 wt%, preferably 0.1 to 0.5 wt%, of the total weight of the composition.

According to a further preferred embodiment of the present invention the hydrolysate has a pH of 2 to 6, preferably 2 to 5.

A pH value within these limits increases significantly the pot life of a sol-gel composition after the reaction. An increased pH leads to an increase of reaction speed and subsequent gelation and is therefore not well suited.

According to the present invention said composition comprises 35 to 55 wt%, preferably 40 to 50 wt%, of the at least one alcohol, wherein the at least one alcohol is a hydrolysis product of the at least one epoxy functionalized alkoxy-silane, the at least one further trialkoxysilane and the at least one aluminum alkoxide, more preferably selected from the group consisting of methanol, ethanol, propan-1-ol, propan-2-ol, and butanol isomers.

According to a preferred embodiment of the present invention the hydrolysate comprises 10 to 50 wt%, preferably 15 to 40 wt%, more preferably 20 to 30 wt%, more preferably 20 to 25 wt%, ethanol in relation to the total amount of alcohol.

For hydrolysis of the alkoxysilanes, in the course of the sol formation, the stoichiometric water quantity should not be exceeded too much. When an ink comprising the sol-gel composition of the present invention dries on a (pre-coated) substrate, condensation reactions and a continuous release of water occur. It was found that it is particularly advantageous for the process if the sol-gel composition comprises a proportion of ethanol. This proportion is preferably 10-30 wt% based on sol, or 2-5 wt% based on ink.

The reason for this is that ethanol, in contrast to the other alcohols (e.g. ethoxypropanol, methoxypropanol...) possibly used in the formulation of the present invention and having a higher boiling temperature, forms an azeotrope with water (96% Ethanol, 4% water). During the evaporation of ethanol, a large part of the water is thus already evaporated before the higher boiling alcohols, which are advantagoues to maintain the processing viscosity, are removed from the sol-gel composition. This accelerates the uniform film formation of an ink comprising the sol-gel composition of the present invention. It is advantageous that the required ethanol portion is provided by the fact that during the hydrolysis of the alkoxy compounds, preferably ethoxy derivatives, e.g. triethoxyphenylsilane, are used at least in part.

Another aspect of the present invention relates to a method for producing a resin comprising the step of reacting a mixture comprising
a) at least one epoxy functionalized alkoxy-silane,
b) at least one further trialkoxysilane and
c) at least one aluminum alkoxide
with water comprising an acidic catalyst, wherein water is added to said mixture in a molar ratio to each hydrolysable group of the at least one epoxy functionalized alkoxy-silane, at least one further trialkoxysilane and at least one aluminum alkoxide as defined above ranging from 0.95:1 to 1:0.95.

In order to obtain the sol-gel composition of the present invention a resin has to be produced by mixing at least one epoxy functionalized alkoxy-silane, at least one further trialkoxysilane and at least one aluminum alkoxide with water comprising an acidic catalyst.

The sol-gel ink of the present invention is preferably applied using ink-jet methods. The surface tension of the inventive ink is preferably less than 30 mN/m, preferably 20 to 30 mN/m, more preferably 25 to 30 mN/m. The dynamic viscosity of the inventive ink is preferably less than 15 mPa.s, more preferably less than 12 mPa.s, more preferably 5 to 12 mPa.s, more preferably 6 to 10 mPa.s.

According to a preferred embodiment of the present invention the pigment is an organic pigment lacking ionogen functional groups, preferably lacking sulfonic and/or amine groups.

It turned out that particularly stable inks can be obtained using pigments lacking reactive substituents. Hence, inorganic pigments are not well suited in the sol-gel ink composition of the present invention, as they are largely based on oxides, whose surfaces are therefore characterised by the presence of hydroxyl groups that tend to aggregate due to their tendency to bind internally. Such a coagulation may lead to a strong increase in viscosity, until the product is unusable (exceeding the pot life).

This also explains why the use of inorganic color pigments or organic pigments with reactive groups is not preferred, since these pigments prevents undesirable interactions between sol-gel resin and pigment surfaces that would otherwise lead to a rapid increase in viscosity and this in a reduction of the pot life.

According to a further preferred embodiment of the present invention the organic pigment is selected from the group consisting of phthalocyanines, quinacridones, quinophthalones, perylene pigments, preferably perylene tetracarboxylic imide, and carbon black.

Suitable pigments used herein include phthalocyanines (blue), quinacridones (red), quinophthalones (yellow) and neutral soot (black). For certain applications in architecture, the use of infrared-reflecting pigments (carbon black absorbs infrared) has proven to be particularly advantageous. Such pigments are known to the skilled artisan. Instead of or in addition to carbon black, perylene tetracarboxylic acid imides, as disclosed for example in WO 2009/147143, can be used to prepare the sol-gel ink of the present invention.

According to another preferred embodiment of the present invention the pigment has an average particle size of less than 1 pm, preferably less than 800 nm, more preferably of 200 to 800 nm, more preferably of 400 to 600 nm.

It is advantageous that the size, preferably the average size, of the pigment particles within the ink composition is preferably less than 1 µm. The ratio of the pigment particle size to the average sol particle size, which is preferably 1 to 200 nm, more preferably 3 to 100 nm, is preferably less than 200 (e.g. 1 µm pigment, sol-gel particles 10 nm, ratio 100:1). If this ratio is exceeded, the smaller gel particles may be attracted more strongly by the larger pigment particles and a so-called core-shell formation occurs, which could lead to coagulation, i.e. a strong increase in viscosity, until the product is unusable (exceeding the pot life).

According to a preferred embodiment of the present invention the ink comprises 10 to 30 wt%, preferably 15 to 25 wt%, of said sol-gel composition and 1 to 8 wt%, preferably 1.5 to 6 wt%, of said pigment.

The sol-gel ink of the present invention may comprise various amounts of pigments whereby the amount may vary depending on the pigment and pigment combination used.

According to another preferred embodiment of the present invention the ink comprises further up to 8 wt%, preferably up to 6 wt%, of at least one additive, preferably a dispersing agent, a defoamer, a levelling agent, a UV-absorber, light stabilizers and/or a heat stabilizer.

The sol-gel ink of the present invention may comprise further components regularly used for inks.

According to a further preferred embodiment of the present invention the ink comprises further 60 to 90 wt%, preferably 65 to 85 wt%, of at least one water-miscible solvent, preferably an alcohol and/or ether alcohols, more preferably C1 to C4 alcohols and/or ethoxy propanol and/or methoxy propanol.

According to a preferred embodiment of the present invention the sol-gel ink is used in a digital print process as a mediator of covalent bonds between a print layer formed by the sol-gel ink and metal oxides and/or metal hydroxides on the metallic substrate and/or hydroxyl groups comprised in a base coat layer covering at least partially the metallic substrate and/or hydroxyl groups comprised in a top coat composition covering at least partially the sol-gel ink.

Hence, another aspect of the present invention relates to a method for coating or printing on a metallic substrate, preferably a coil coating or printing process, comprising the steps of
a) applying a sol-gel ink according to the present invention on a metallic substrate or on a base coat layer covering at least partially a metallic substrate, and
b) applying a top coat composition comprising at least one saturated polyester resin.

In order to coat or print a metallic substrate, preferably a deformable or flexible metallic substrate, it is advantageous to apply the sol-gel ink of the present invention in combination with further coating layers in order to obtain a stable printing or coating.

In a first step, the sol-gel ink of the present invention is applied on a base coat or directly on a metallic substrate or metallic surface. Residual epoxy groups, which are surprisingly present in the sol-gel ink, react at least with the hydroxyl groups (of the at least one polyester resin) present in the base coat or on the surface of the metallic substrate. Due to this crosslinking reaction the sol-gel ink will be tightly bound to the base coat or metallic surface.

In a second step a top coat composition is applied on the sol-gel ink print or layer. Again the epoxy groups present in the sol-gel ink react at least with the hydroxyl groups (of the at least one polyester resin) present in the top coat. Thus, the top coat protects the sol-gel print or layer from environmental and mechanical influences.

As mentioned above the sol-gel ink may also applied on a base coat covering at least partially or even entirely a metallic substrate. In order to obtain such a base coat a base coat composition (primer) may be applied on a metallic substrate. This base coat forms the basis on which the sol-gel ink of the present application is applied. The base coat comprises at least one polyester resin and is able to bind to the metallic substrate by chemical (ionic and/or covalent) bonds.

The single coating steps (layers) can be interrupted by drying and thermal curing steps, but are preferably carried out immediately one after the other in a single conveyor system. This allows to control the layer thickness more easily than with non-continuous coating methods. In addition, there is hardly any loss of paint through overspray, as is the case with classic wet paint spraying.

Colour printing (application of the sol-gel ink of the present invention) is carried out in accordance with today's requirements for production flexibility, freedom of design and economic efficiency from "industrial digital printing", which is increasingly replacing conventional processes such as offset, flexographic printing, screen printing, etc.

The sol-gel ink is preferably applied using an ink jet system, where ink drops are applied using precise digitally controlled dosing systems (e.g. piezo pumps).

According to a preferred embodiment of the present invention the base coat composition comprises at least one anti-corrosive pigment, preferably selected from the group consisting of zinc phosphate, magnesium oxyaminophosphate, zinc borate and aluminium orthophosphate, and/or at least one white pigment, preferably selected from the group consisting of titanium dioxide, zinc oxide, zinc sulphide and lithopone.

The base coat composition may comprise at least one anti-corrosive pigment. This is particularly advantageous to protect the metallic substrate from corrosion.

In order to allow printing on the base coat with the sol-gel ink of the present invention, the base coat composition may also comprise pigments, in particular white pigments. The presence of white pigments facilitates the printing of the base coat with coloured sol-gel ink.

According to another preferred embodiment of the present invention the polyester resin of the base coat composition and/or the top coat composition comprises free COOH- and/or OH-groups, wherein said free COOH-groups mediate binding of the base coat composition to the metallic substrate and to reactive groups of the sol-gel ink.

As mentioned above free reactive groups within the base coat and within the top coat allows a better binding of the sol-gel ink on the metallic substrate or between the layers.

According to a further preferred embodiment of the present invention the polyester resin of the base coat and/or top coat composition has a total acid number ranging from 2 to 15, preferably from 3 to 10, more preferably from 3 to 5.

It has been found that the acid number is a good measure of the binding capacity and strength of the base coat to the metallic substrate. The reason for this is the very fast and assured ion reaction between the metal surface (Fe, Zn, Al ...) and its unavoidable oxidation products, usually hydroxides, and the acid components in the resin. In the case of thin layers, it can be assumed that the majority of the available -COOH groups are used for covalent bonding to the metal immediately after application (ion reaction). In the case of thermally forced drying, this process is completed and at the same time the cross-linking of the hydroxyl groups is initiated with the corresponding approaches

According to a preferred embodiment of the present invention the polyester resin of the base and/or top coat composition has a total hydroxyl number ranging from 20 to 150, preferably from 25 to 100, more preferably from 30 to 60.

Hydroxyl groups present in the polyester resin, preferably in heat-drying polyester resins, are advantageous for cross-linking with melamine components, for instance.

According to another preferred embodiment of the present invention the polyester resin of the base coat composition is a condensate of an acid selected from the group consisting of a phthalic acid, preferably hexahydrophthalic acid, isophtalic acid, terephthalic acid, trimellitic acid, succinic acid, adipic acid, sebacic acid, a naphthalene dicarboxylic acid, preferably 2,6-naphthalene dicarboxylic acid, and/or their anhydrides and combinations thereof with one or more multifunctional alcohols or polyalcohols, preferably selected from the group consisting of ethylene glycol, propylene glycol, dipropyleneglycol, butylene glycol, pentanediol, neopentyl glycol, hexanediol, trimethylolpropane, pentaerythritol and combinations thereof.

Another aspect of the present invention relates to a coated metallic substrate obtainable by a method according to the present invention.

The method of the present invention can be used to print or coat any metallic substrate with the sol-gel ink of the present invention. The metallic substrate may consist entirely of a metal including steel, aluminum or alloys of these metals or may be a metallic surface coating any other material. The metallic substrate may be a metallic sheet comprising steel, galvanised steel, brass and/or aluminum or a tinplate. The metallic substrate may have any form, whereby it is particularly preferred that the metallic substrate is a sheet preferably in the form of a coil.

### EXAMPLES

### Example 1: Preparation of the sol-gel-resin

The components used to prepare sol-gel-resins are shown in Tables 1 and 2.

The silanes and the aluminum alkoxide were thoroughly mixed together. P-toluenesulfonic acid (PTSA) was dissolved in the indicated amount of water.

The alkoxide mixture was stirred for 10 min prior to addition of the acid-water mixture. At a starting temperature of 20°C to 25°C the PTS-solution was added to the silane mixture under stirring so that the temperature of the reaction mixture did not exceed 50°C (if necessary the reaction mixture was cooled).

Upon addition of the acid-water mixture, the solution turned from transparent to milky, going through an immiscibility phase which dramatically increased the viscosity. After a few seconds the viscosity decreased whilst the solution stayed milky. An increase in the temperature was observed due to exothermic hydrolysis. The temperature reached a maximum of 50°C and then decreased to room temperature after around 30 minutes and the sol turned clear again after around 1 hour.

The mixture was stirred for another hour.

The final sol-gel mixture was stored at temperatures between 5°C and 25°C for maximum 3 months.

**Table 1: Sol-gel compositions**

| | **composition** | | | | |
|---|---|---|---|---|---|
| **No.** | **1** | **2** | **3** | **4** | **5** |
| **ingredients** | moles | moles | moles | moles | moles |
| 3-glycidyloxypropyl-trimethoxysilane | 3 | 5 | - | 4 | - |
| 3-glycidyloxypropyl-methyl-dimethoxysilane | - | - | - | - | 3 |
| 2-(3,4-epoxycyclohexyl)-propyltrimethoxysilane | - | - | 5 | 1 | - |
| 3-glycidyloxyoctyl-triethoxysilane | 2 | - | - | - | 1 |
| phenyl-triethoxysilane | - | 1,5 | 2 | 3 | 3 |
| butyl-trimethoxysilane | - | 1,5 | 1 | - | - |
| Al-tributoxide | 1,2 | 1,3 | 1,3 | 1,2 | 1,25 |
| deionized water | 18 | 28,5 | 28 | 27,5 | 21,5 |
| p-toluenesulfonic acid | 0, 05 | 0, 05 | 0, 05 | 0,02 | 0,06 |

| **characteristics** | | | | | |
|---|---|---|---|---|---|
| storage stability [days] | <15 | 45 | 30 | 20 | 45 |
| adhesion to coating system (ISO 2409:2013; cross-cut test) | 5 | 3 | 3 | 1 | 4 |

**Table 2: Sol-gel compositions**

| | **composition** | | | | |
|---|---|---|---|---|---|
| | **6** | **7** | **8** | **9** | **10** |
| **ingredients** | moles | moles | moles | moles | moles |
| 3-glycidyloxypropyl-trimethoxysilane | 4 | 5 | 5 | 5 | 3 |
| 3-glycidyloxypropyl-methyl-dimethoxysilane | 1 | - | - | - | 1 |
| 2-(3,4-epoxycyclohexyl)-propyltrimethoxysilane | - | 3 | - | - | 1 |
| 3-glycidyloxyoctyl-triethoxysilane | - | - | - | - | - |
| phenyl-triethoxysilane | 2 | 4 | 3 | 3 | 2 |
| butyl-trimethoxysilane | 1 | - | - | - | 1 |
| Al-tributoxide | 1,5 | 2 | 1,1 | 1,3 | 1,2 |
| deionized water | 27,5 | 40 | 27,5 | 27, 9 | 27 |
| p-toluenesulfonic acid | 0,03 | 0, 03 | 0, 05 | 0,04 | - |

| **characteristics** | | | | | |
|---|---|---|---|---|---|
| storage stability [days] | 60 | 90 | 70 | 90 | <15 |
| adhesion to coating system (ISO 2409:2013; cross-cut test) | 3 | 1 | 2 | 0 | 4 |

### Example 2: Preparation of the sol-gel inks

### Preparation of the pigment paste

Under a Cowles blade stirrer (or equivalent) the components were added in the formulation order (see Table 3) .

After adding the components the dispersion speed (value depending to the machine and quantity) was increased and the dispersion was stirred for at least 30 minutes.

The paste was transferred to a high-speed basket mill for the pigments grinding. The pigments finesses was less than 1 µm.

**Table 3: Pigment paste**

| **ingredient** | **% (w/w)** | |
|---|---|---|
| ethoxypropanole | 70 - 80 | solvent |
| Bykjet 9132¹⁾ | 5 - 10 | dispersing agent |
| pigment | 10 - 18 | pigment |
| Joncryl 611²⁾ | 2 - 6 | low molecular wt acrylic resin |

| | | |
|---|---|---|
| ¹⁾BYK additives; www.byk.com ²⁾BASF Dispersions and Resins; www.basf.com | | |

### Preparation of the sol-gel inks

Under a Cowles blade stirrer (or equivalent) the components were added in the formulation order (see Table 4) .

After adding the components the dispersion speed (value depending to the machine and quantity) was increased and the dispersion was stirred for at least 30 minutes.

After 12 hours the samples were tested for viscosity and surface tension. The viscosity ranged from 6 to 10 mPa.s; the surface tension ranged from 25 to 30 mN m.

The formulations were robust and easy to reproduce.

**Table 4: Sol-gel ink**

| **ingredient** | **% (w/w)** | |
|---|---|---|
| pigment paste | 15 - 25 | - |
| ethoxypropanole | 45 - 70 | solvent |
| Byk 399¹⁾ | 0,2 - 0,5 | defoaming / levelling agent |
| sol-gel-resin | 15 - 25 | - |

| | | |
|---|---|---|
| ¹⁾BYK additives; www.byk.com | | |

### Example 3: Printing a steel plate

A steel plate was coated with a base coat composition (see Table 5) to obtain a 5 to 10 µm base coating. After the application of the base coat composition on the steel plate the coating was cured at a temperature of 230°C ± 10°C.

**Table 5: Base coat composition**

| **ingredient** | **% (w/w)** | |
|---|---|---|
| Dynapol LH 727-02 ³⁾ | 51,0 | 50% saturated polyester resin in solvents |
| | | OH-number: 100; acid-number: 10 |
| butylglycol | 8,5 | solvent |
| dibasic ester | 8, 7 | solvent |
| titaniumdioxide rutil | 13,5-15,0 | pigment |
| Novinox XCA 02 ⁴⁾ | 5-8 | corrosion inhibiting pigment |
| ASP 600 kaolin ²⁾ | 0-3 | extender |
| Aerosil 200 ⁷⁾ | 0,7 | rheology control additive |
| Cymel 303 LF ⁵⁾ | 6, 0 | melamine-resin, cross-linker |
| Additive EP 135 ⁶⁾ | 3, 0 | epoxy-phosphate-ester |
| Cycat 4040 ⁵⁾ | 0,2 | catalyst |
| additives | 0,4 | levelling agent |
| **total** | **100,0** | |

The sol-gel ink of example 2 was applied onto the base coat of the steel plate. After a short drying period a top coat composition (see Table 6) was applied at a thickness of 20 to 24 µm and cured at a temperature of 230°C ± 10°C.

**Table 6: Top coat composition**

| **ingredient** | **% (w/w)** | |
|---|---|---|
| Domopol 5157 ⁶⁾ | 45, 0 | 65% saturated polyester resin in solvents |
| | | OH-number: 45; acid-number: 3 |
| Domopol 5131 ⁶⁾ | 22,0 | 65% saturated polyester resin in solvents |
| | | OH-number: 40; acid-number: 8 |
| Nafta 150 / Dibasic ester 1/1 | 7,0 | solvent |
| butylglycol | 13,50 | solvent |
| methoxypropanole | 1,0 | solvent |
| Epikote 828 ⁸⁾ | 0,5 | liquid Bis-A-epoxy resin |
| Cymel 303 LF ⁵⁾ | 7,0 | melamine-resin, cross-linker |
| Cycat 4040 ⁵⁾ | 0, 6 | catalyst |
| Tinuvin 123 ²⁾ | 0, 8 | light stabilizer |
| Acematt 810 ⁷⁾ | 2, 6 | matting agent |
| **total** | **100,0** | |

| | | |
|---|---|---|
| ²⁾ BASF Dispersions and Resins; www.basf.com ³⁾ EVONIK https://www.dynapol.com/product/dynapol/en ⁴⁾ SNCZ https://www.sncz.com/ ⁵⁾ allnex www.allnex.com ⁶⁾ Helios TBLUS d.o.o. www.resinshelios.com ⁷⁾ EVONIK https://www.silica-specialist.com/product/silica/en/ ⁸⁾ HEXION www.hexion.com | | |

## Claims

1. A reactive sol-gel ink for printing a metallic substrate, preferably for a coil coating process, comprising 10 to 30 wt% of a sol-gel resin composition and at least one pigment, preferably at least one yellow pigment, at least one purple pigment, at least one cyan pigment or at least one black pigment, wherein the sol-gel resin composition comprises
a) 35 to 65 wt% of a hydrolysate obtainable by reacting a mixture comprising at least one epoxy functionalized alkoxy-silane, at least one further trialkoxysilane and at least one aluminum alkoxide with water comprising at least one acidic catalyst, wherein water is added to said mixture in a molar ratio to each hydrolysable group of the at least one epoxy functionalized alkoxy-silane, the at least one further trialkoxysilane and the at least one aluminum alkoxide ranging from 0.95:1 to 1:0.95,
b) 35 to 55 wt% of at least one alcohol,wherein the at least one alcohol is a hydrolysis product of the at least one epoxy functionalized alkoxy-silane, the at least one further trialkoxysilane and the at least one aluminum alkoxide and
c) 0.1 to 10 wt% water.

2. Sol-gel ink according to claim 1, wherein the at least one epoxy functionalized alkoxy-silane is selected from the group consisting of glycidyloxyalkylalkoxysilanes, preferably 3-glycidyloxypropyl-trimethoxysilane, 3-glycidyloxypropyl-triethoxysilane, 3-glycidyloxypropyl-methyldimethoxysilane, 3-glycidyloxypropyl-methyldiethoxysilane, 3-glycidyloxyoctyltrimethoxysilane or 3-glycidyloxyoctyl-triethoxysilane, 2-(3,4-epoxycyclohexyl)ethyltrimethoxysilane, 2-(3,4-epoxycyclohexyl)ethyltriethoxysilane, 2-(3,4-epoxycyclohexyl)propyltrimethoxysilane, 2-(3,4-epoxycyclohexyl)propyltriethoxysilane and 5,6-epoxyhexyl-trimethoxysilane, preferably selected from the group consisting of 3-glycidyloxypropyl-trimethoxysilane, 3-glycidyloxypropyl-triethoxysilane, 3-glycidyloxyoctyl-trimethoxysilane and 3-glycidyloxyoctyl-triethoxysilane.

3. Sol-gel ink according to claim 1 or 2, wherein the at least one further trialkoxysilane has the general formula (I)
R₁Si(OR₂)₃ (I),
wherein R₁ is a linear or branched alkyl group having from 1 to 6 carbon atoms or an aryl-group and R₂ is a linear or branched alkyl group having from 1 to 4 carbon atoms.

4. Sol-gel ink according to any one of claims 1 to 3, wherein the at least one further trialkoxysilane is triethoxyphenylsilane.

5. Sol-gel ink according to any one of claims 1 to 4, wherein the at least one aluminum alkoxide is aluminum sec-butoxide.

6. Sol-gel ink according to any one of claims 1 to 5, wherein the molar ratio between the at least one epoxy functionalized alkoxy-silane and the at least one further trialkoxysilane in the mixture a) ranges from 3:1 to 1:2, preferably 2:1 to 1:1, more preferably 1.8:1 to 1.4:1, in particular 5:3.

7. Sol-gel ink according to any one of claims 1 to 6, wherein the molar ratio of the at least one epoxy functionalized alkoxy-silane and the at least one further trialkoxysilane to the at least one aluminum alkoxide in the mixture a) ranges from 2.3:1 to 10:1, preferably 5:1 to 7:1, more preferably 6:1 to 7:1.

8. Sol-gel ink according to any one of claims 1 to 7, wherein the acidic catalyst has a pKa value of less than 5, preferably less than 4.75, more preferably less than -2.

9. Sol-gel ink according to any one of claims 1 to 8, wherein the acidic catalyst is an organic acid, preferably an aryl sulfonic acid, more preferably p-toluenesulfonic acid.

10. Sol-gel ink according to any one of claims 1 to 9, wherein the at least one pigment is an organic pigment lacking ionogen functional groups, preferably lacking sulfonic and/or amine groups, said at least one organic pigment being preferably selected from the group consisting of phthalocyanines, quinacridones, quinophthalones, perylene pigments, preferably perylene tetracarboxylic imide, and carbon black.

11. Sol-gel ink according to any one of claims 1 to 10, wherein the pigment has an average particle size of less than 1 pm, preferably less than 800 nm, more preferably of 200 to 800 nm, more preferably of 400 to 600 nm.

12. Method for coating a metallic substrate, preferably a coil coating process, comprising the steps of
a) applying a sol-gel ink according to any one of claims 1 to 11 on a metallic substrate or on a base coat layer covering at least partially a metallic substrate, preferably using ink jet means, and
b) applying a top coat composition comprising at least one saturated polyester resin.

13. Method according to claim 12, wherein the base coat layer is formed by a base coat composition comprising at least one saturated polyester resin.

14. Method according to claim 12 or 13, wherein the polyester resin of the base coat composition and/or the top coat composition comprises free COOH- and/or OH-groups, wherein said free COOH-groups mediate binding of the base coat composition to the metallic substrate and to reactive groups of the sol-gel ink.

15. Method according to any one of claims 12 to 14, wherein the polyester resin of the base coat and/or top coat composition has a total acid number ranging from 2 to 15, preferably from 3 to 10, more preferably from 3 to 5, and optionally a total hydroxyl number ranging from 20 to 150, preferably from 25 to 100, more preferably from 30 to 60.

16. Coated metallic substrate obtainable by a method according to any one of claims 12 to 15.

## Patentansprüche

1. Reaktive Sol-Gel-Tinte zum Bedrucken eines metallischen Substrats, vorzugsweise für ein Coil-Coating-Verfahren, umfassend 10 bis 30 Gew.-% einer Sol-Gel-Harzzusammensetzung und mindestens ein Pigment, vorzugsweise mindestens ein Gelbpigment, mindestens ein Purpurpigment, mindestens ein Cyanpigment oder mindestens ein Schwarzpigment, wobei die Sol-Gel-Harzzusammensetzung umfasst
a) 35 bis 65 Gew.-% eines Hydrolysats, erhältlich durch Umsetzen eines Gemischs, das mindestens ein epoxyfunktionalisiertes Alkoxysilan, mindestens ein weiteres Trialkoxysilan und mindestens ein Aluminiumalkoxid umfasst, mit Wasser, das mindestens einen sauren Katalysator enthält, wobei Wasser dem Gemisch in einem Molverhältnis zu jeder hydrolysierbaren Gruppe des mindestens einen epoxyfunktionalisierten Alkoxysilans, des mindestens einen weiteren Trialkoxysilans und des mindestens einen Aluminiumalkoxids im Bereich von 0,95:1 bis 1:0,95 zugesetzt wird,
b) 35 bis 55 Gew.-% mindestens eines Alkohols, wobei der mindestens eine Alkohol ein Hydrolyseprodukt des mindestens einen epoxyfunktionalisierten Alkoxysilans, des mindestens einen weiteren Trialkoxysilans und des mindestens einen Aluminiumalkoxids ist und
c) 0,1 bis 10 Gew.-% Wasser.

2. Sol-Gel-Tinte nach Anspruch 1, wobei das mindestens eine epoxyfunktionalisierte Alkoxysilan ausgewählt ist aus der Gruppe bestehend aus Glycidyloxyalkylalkoxysilanen, vorzugsweise 3-Glycidyloxypropyl-trimethoxysilan, 3-Glycidyloxypropyl-triethoxysilan, 3-Glycidyloxypropyl-methyldimethoxysilan, 3-Glycidyloxypropyl-methyldiethoxysilan, 3-Glycidyloxyoctyltrimethoxysilan oder 3-Glycidyloxyoctyl-triethoxysilan, 2-(3,4-epoxycyclohexyl)ethyltrimethoxysilan, 2-(3,4-Epoxycyclohexyl)ethyltriethoxysilan, 2-(3,4-Epoxycyclohexyl)propyltrimethoxysilan, 2-(3,4-Epoxycyclohexyl)propyltriethoxysilan und 5,6-Epoxyhexyl-trimethoxysilan, vorzugsweise ausgewählt aus der Gruppe bestehend aus 3-Glycidyloxypropyl-trimethoxysilan, 3-Glycidyloxypropyl-triethoxysilan, 3-Glycidyloxyoctyl-trimethoxysilan und 3-Glycidyloxyoctyl-triethoxysilan.

3. Sol-Gel-Tinte nach Anspruch 1 oder 2, wobei das mindestens eine weitere Trialkoxysilan die allgemeine Formel (I) hat
R₁Si(OR₂)₃ (I),
wobei R₁ eine lineare oder verzweigte Alkylgruppe mit 1 bis 6 Kohlenstoffatomen oder eine Arylgruppe ist und R₂ eine lineare oder verzweigte Alkylgruppe mit 1 bis 4 Kohlenstoffatomen ist.

4. Sol-Gel-Tinte nach einem der Ansprüche 1 bis 3, wobei das mindestens eine weitere Trialkoxysilan Triethoxyphenylsilan ist.

5. Sol-Gel-Tinte nach einem der Ansprüche 1 bis 4, wobei das mindestens eine Aluminiumalkoxid Aluminium-Sek-Butoxid ist.

6. Sol-Gel-Tinte nach einem der Ansprüche 1 bis 5, wobei das Molverhältnis zwischen dem mindestens einen epoxyfunktionalisierten Alkoxysilan und dem mindestens einen weiteren Trialkoxysilan in der Mischung a) im Bereich von 3:1 bis 1:2, vorzugsweise 2:1 bis 1:1, besonders bevorzugt 1,8:1 bis 1,4:1, insbesondere 5:3 liegt.

7. Sol-Gel-Tinte nach einem der Ansprüche 1 bis 6, wobei das molare Verhältnis des mindestens einen epoxyfunktionalisierten Alkoxysilans und des mindestens einen weiteren Trialkoxysilans zu dem mindestens einen Aluminiumalkoxid in der Mischung a) im Bereich von 2,3:1 bis 10:1, vorzugsweise 5:1 bis 7:1, besonders bevorzugt 6:1 bis 7:1 liegt.

8. Sol-Gel-Tinte nach einem der Ansprüche 1 bis 7, wobei der saure Katalysator einen pKa-Wert von weniger als 5, vorzugsweise weniger als 4,75, besonders bevorzugt weniger als -2 hat.

9. Sol-Gel-Tinte nach einem der Ansprüche 1 bis 8, wobei der saure Katalysator eine organische Säure, vorzugsweise eine A-rylsulfonsäure, besonders bevorzugt p-Toluolsulfonsäure, ist.

10. Sol-Gel-Tinte nach einem der Ansprüche 1 bis 9, wobei das mindestens eine Pigment ein organisches Pigment ohne ionogene funktionelle Gruppen, vorzugsweise ohne Sulfon- und/oder Amingruppen, ist, wobei das mindestens eine organische Pigment vorzugsweise ausgewählt ist aus der Gruppe bestehend aus Phthalocyaninen, Chinacridonen, Chinophthalonen, Perylenpigmenten, vorzugsweise Perylentetracarbonsäureimid, und Ruß.

11. Sol-Gel-Tinte nach einem der Ansprüche 1 bis 10, wobei das Pigment eine durchschnittliche Teilchengröße von weniger als 1 pm, vorzugsweise von weniger als 800 nm, noch bevorzugter von 200 bis 800 nm, noch bevorzugter von 400 bis 600 nm aufweist.

12. Verfahren zur Beschichtung eines metallischen Substrats, vorzugsweise ein Coil-Coating-Verfahren, das die folgenden Schritte umfasst
a) Aufbringen einer Sol-Gel-Tinte nach einem der Ansprüche 1 bis 11 auf ein metallisches Substrat oder auf eine zumindest teilweise ein metallisches Substrat bedeckende Grundschicht, vorzugsweise mittels Tintenstrahlverfahren, und
b) Auftragen einer Deckschichtzusammensetzung, die mindestens ein gesättigtes Polyesterharz enthält.

13. Verfahren nach Anspruch 12, wobei die Basislackschicht durch eine Basislackzusammensetzung gebildet wird, die mindestens ein gesättigtes Polyesterharz enthält.

14. Verfahren nach Anspruch 12 oder 13, wobei das Polyesterharz der Basislackzusammensetzung und/oder der Decklackzusammensetzung freie COOH- und/oder OH-Gruppen umfasst, wobei die freien COOH-Gruppen die Bindung der Basislackzusammensetzung an das metallische Substrat und an reaktive Gruppen der Sol-Gel-Tinte vermitteln.

15. Verfahren nach einem der Ansprüche 12 bis 14, wobei das Polyesterharz der Basislack- und/oder Decklackzusammensetzung eine Gesamtsäurezahl im Bereich von 2 bis 15, vorzugsweise von 3 bis 10, besonders bevorzugt von 3 bis 5, und gegebenenfalls eine Gesamthydroxylzahl im Bereich von 20 bis 150, vorzugsweise von 25 bis 100, besonders bevorzugt von 30 bis 60, aufweist.

16. Beschichtetes metallisches Substrat, erhältlich durch ein Verfahren nach einem der Ansprüche 12 bis 15.

## Revendications

1. Encre réactive sol-gel pour l'impression d'un substrat métallique, de préférence pour un procédé de revêtement de bobine, comprenant de 10 à 30 % en poids d'une composition de résine sol-gel et au moins un pigment, de préférence au moins un pigment jaune, au moins un pigment violet, au moins un pigment cyan ou au moins un pigment noir, dans laquelle la composition de résine sol-gel comprend
a) de 35 à 65 % en poids d'un hydrolysat pouvant être obtenu en faisant réagir un mélange comprenant au moins un alcoxysilane fonctionnalisé par époxy, au moins un trialcoxysilane supplémentaire et au moins un alcoxyde d'aluminium avec de l'eau comprenant au moins un catalyseur acide, dans laquelle de l'eau est ajoutée audit mélange selon un rapport molaire par rapport à chaque groupe hydrolysable du au moins un alcoxysilane fonctionnalisé par époxy, du au moins un trialcoxysilane supplémentaire et du au moins un alcoxyde d'aluminium allant de 0,95:1 à 1:0,95,
b) de 35 à 55 % en poids d'au moins un alcool, dans laquelle le au moins un alcool est un produit d'hydrolyse du au moins un alcoxysilane fonctionnalisé par époxy, du au moins un trialcoxysilane supplémentaire et du au moins un alcoxyde d'aluminium, et
c) de 0,1 à 10 % en poids d'eau.

2. Encre sol-gel selon la revendication 1, dans laquelle le au moins un alcoxysilane fonctionnalisé par époxy est choisi dans le groupe constitué de glycidyloxyalkylalcoxysilanes, de préférence le 3-glycidyloxypropyl-triméthoxysilane, le 3-glycidyloxypropyl-triéthoxysilane, le 3-glycidyloxypropyl-méthyldiméthoxysilane, le 3-glycidyloxypropylméthyldiéthoxysilane, le 3-glycidyloxyoctyl-triméthoxysilane ou le 3-glycidyloxyoctyl-triéthoxysilane, le 2-(3,4-époxycyclohexyl)éthyltriméthoxysilane, le 2-(3,4-époxy cyclohexyl)éthyltriéthoxy silane, le 2-(3,4-époxycyclohexyl) propyltriméthoxysilane, le 2-(3,4-époxycyclohexyl)propyltriéthoxysilane et le 5,6-époxyhexyltriméthoxysilane, de préférence choisi dans le groupe constitué du 3-glycidyloxypropyl-triméthoxysilane, du 3-glycidyloxypropyltriéthoxysilane, du 3-glycidyloxyoctyltriméthoxysilane et du 3-glycidyloxyoctyltriéthoxysilane.

3. Encre sol-gel selon la revendication 1 ou 2, dans laquelle le au moins un trialcoxysilane supplémentaire répond à la formule générale (I)
R₁Si(OR₂)₃ (I),
dans laquelle R₁ est un groupe alkyle linéaire ou ramifié présentant de 1 à 6 atomes de carbone ou un groupe aryle, et R₂ est un groupe alkyle linéaire ou ramifié présentant de 1 à 4 atomes de carbone.

4. Encre sol-gel selon l'une quelconque des revendications 1 à 3, dans laquelle le au moins un trialcoxysilane supplémentaire est le triéthoxyphénylsilane.

5. Encre sol-gel selon l'une quelconque des revendications 1 à 4, dans laquelle le au moins un alcoxyde d'aluminium est le sec-butoxyde d'aluminium.

6. Encre sol-gel selon l'une quelconque des revendications 1 à 5, dans laquelle le rapport molaire entre le au moins un alcoxysilane fonctionnalisé par époxy et le au moins un trialcoxysilane supplémentaire dans le mélange a) est dans la plage de 3:1 à 1:2, de préférence de 2:1 à 1:1, de manière plus préférée de 1,8: 1 à 1,4:1, en particulier est de 5:3.

7. Encre sol-gel selon l'une quelconque des revendications 1 à 6, dans laquelle le rapport molaire du au moins un alcoxysilane fonctionnalisé par époxy et du au moins un trialcoxysilane supplémentaire par rapport au au moins un alcoxyde d'aluminium dans le mélange a) est dans la plage de 2,3:1 à 10:1, de préférence de 5:1 à 7:1, de manière plus préférée de 6:1 à 7:1.

8. Encre sol-gel selon l'une quelconque des revendications 1 à 7, dans laquelle le catalyseur acide présente une valeur pKa inférieure à 5, de préférence inférieure à 4,75, de manière plus préférée inférieure à -2.

9. Encre sol-gel selon l'une quelconque des revendications 1 à 8, dans lequel le catalyseur acide est un acide organique, de préférence un acide arylsulfonique, de manière plus préférée l'acide p-toluènesulfonique.

10. Encre sol-gel selon l'une quelconque des revendications 1 à 9, dans laquelle le au moins un pigment est un pigment organique dépourvu de groupes fonctionnels ionogènes, de préférence dépourvu de groupes sulfoniques et/ou aminés, ledit au moins un pigment organique étant de préférence choisi dans le groupe constitué par les phtalocyanines, les quinacridones, les quinophtalones, les pigments de pérylène, de préférence l'imide de pérylène tétracarboxylique et le noir de carbone.

11. Encre sol-gel selon l'une quelconque des revendications 1 à 10, dans laquelle le pigment présente une taille de particule moyenne inférieure à 1 µm, de préférence inférieure à 800 nm, de manière plus préférée de 200 à 800 nm, de manière plus préférée de 400 à 600 nm.

12. Procédé de revêtement d'un substrat métallique, de préférence un procédé de revêtement de bobine, comprenant les étapes consistant à
a) appliquer une encre sol-gel selon l'une quelconque des revendications 1 à 11 sur un substrat métallique ou sur une couche de revêtement de base recouvrant au moins partiellement un substrat métallique, de préférence à l'aide de moyens à jet d'encre, et
b) appliquer une composition de couche de finition comprenant au moins une résine de polyester saturée.

13. Procédé selon la revendication 12, dans lequel la couche de revêtement de base est formée par une composition de revêtement de base comprenant au moins une résine de polyester saturée.

14. Procédé selon la revendication 12 ou 13, dans lequel la résine de polyester de la composition de revêtement de base et/ou de la composition de revêtement de finition comprend des groupes COOH- et/ou OH libres, lesdits groupes COOH libres favorisent la liaison de la composition de revêtement de base au substrat métallique et aux groupes réactifs de l'encre sol-gel.

15. Procédé selon l'une quelconque des revendications 12 à 14, dans lequel la résine de polyester de la composition de revêtement de base et/ou de revêtement de finition présente un indice d'acide total dans une plage allant de 2 à 15, de préférence de 3 à 10, de manière plus préférée de 3 à 5, et éventuellement un indice d'hydroxyle total dans une plage allant de 20 à 150, de préférence de 25 à 100, de manière plus préférée de 30 à 60.

16. Substrat métallique revêtu pouvant être obtenu par un procédé selon l'une quelconque des revendications 12 à 15.
